# EUROPÄISCHE PATENTSCHRIFT

(11) **EP 0 576 505 B1**
(45) Veröffentlichungstag und Bekanntmachung des Hinweises auf die Patenterteilung: **10.09.1997**
(21) Anmeldenummer: 92906747.8
(22) Anmeldetag: 13.03.1992
(51) Int. Cl.: H04Q 3/66

(54) **KOMMUNIKATIONSANLAGE**
COMMUNICATIONS INSTALLATION
SYSTEME DE COMMUNICATION

(30) Priorität: 22.03.1991 DE 4109534
(43) Veröffentlichungstag der Anmeldung: 05.01.1994
(73) Patentinhaber: SIEMENS AKTIENGESELLSCHAFT, 80333 München (DE)
(72) Erfinder: NIESSNER, Gerhard, D-82194 Gröbenzell (DE); SEUL, Peter, D-82340 Feldafing (DE)
(86) Internationale Anmeldenummer: DE9200216
(87) Internationale Veröffentlichungsnummer: WO9217037

(56) Entgegenhaltungen:
- EP-A- 0 421 583
- WO-A-87/03763

## Beschreibung

Die vorliegende Erfindung betrifft eine aus einer zentralen Steuerung, mehreren peripheren Steuerungen und einer Vielzahl von peripheren Baugruppen bestehenden Kommunikationsanlage.

Bei derart aufgebauten Kommunikationsanlagen übernehmen die peripheren Steuerungen Aufgaben der Schicht 2 nach dem sogenannten ISO-Schichtmodell, d. h. sie sind für die Kennung und Korrektur von Übertragungsfehlern und die Zeichensynchronisation zuständig. Gleichzeitig steuern sie den Meldungsverkehr zur zentralen Steuerung. Jede periphere Steuerung ist dabei einer festen Anzahl von vorgegebenen Teilnehmern bzw. Amtsleitungen zugeordnet. Dies hat den Nachteil, daß bei Auftreten von Spitzenbelastungen in einzelnen peripheren Steuerungen eine Überlastung eintreten kann und als Folge davon die Reaktionszeiten dieser peripheren Steuerungen zu lang werden, während andere periphere Steuerungen nicht ausgelastet sind. Diese ungleiche Auslastung der peripheren Steuerungen ergibt sich aus der Tatsache, daß sich die jeweilige Anzahl der peripheren Steuerungen ausschließlich nach der Anzahl der vorhandenen Amtssätze bzw. der angeschlossenen Teilnehmer richtet und nicht nach dem wirklichen Verkehrsaufkommen.

Aufgabe der vorliegenden Erfindung ist es, eine Kommunikationsanlage der obengenannten Art anzugeben, bei welcher eine Uberlastung einzelner peripherer Steuerungen vermieden wird.

Diese Aufgabe wird erfindungsgemäß durch eine Kommunikationsanlage der eingangs genannten Art gelöst,
- bei der alle peripheren Baugruppen über eigene Datenleitungen mit der zentralen Steuerung verbunden sind,
   -- wobei über diese Datenleitungen sowohl Informationsdaten als auch Signalisierungsdaten übertragen werden,
- bei der innerhalb der zentralen Steuerung die Informationsdaten von den Signalisierungsdaten getrennt werden,
- bei der die Signalisierungsdaten über einen separaten Daten-Highway den peripheren Steuerungen zugeführt werden,
   -- wobei jede periphere Steuerung einen den jeweiligen Auslatungsgrad angegeben Software-Zähler aufweist, und
   -- wobei bei hoher Auslatung einer peripheren Steuerung die Signalisierungsdaten auf andere periphere Steuerungen umgeleitet werden.

Bei der erfindungsgemäßen Kommunikationsanlage werden abhängig vom jeweiligen Verkehrsaufkommen eine oder mehrere periphere Steuerungen aktiviert, so daß eine Überlastung einer einzelnen peripheren Steuerung ausgeschlossen ist. Darüberhinaus bietet die Kommunikationsanlage gemäß der vorliegenden Erfindung den Vorteil, daß beim Erstaufbau der Anlage nur eine geringe Vorleistung zu erbringen ist, da nur soviele periphere Steuerungen vorgesehen werden müssen, wie dies nach dem maximal zu erwartenden Verkehrsaufkommen notwendig ist. Bei einem späteren Ausbau der Anlage bzw. bei einer späteren Erweitung für Datenverkehr und Paketvermittlung können dann weitere periphere Steuerungen installiert werden.

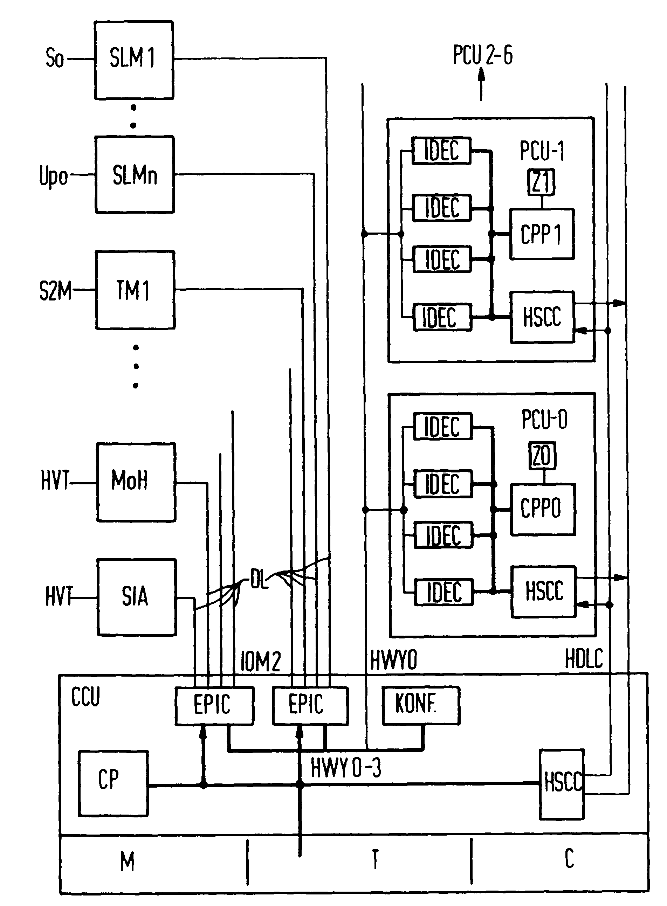

Nachfolgend wird die erfindungsgemäße Kommunikationsanlage anhand eines in der Zeichnung dargestellten Ausführungsbeispiels näher beschrieben.

Die in der Zeichnung dargestellte Kommunikationsanlage besteht aus der zentralen Steuerung CCU, den peripheren Steuerungen PCU - 0 bis z. B. PCU 6 - sowie den peripheren Baugruppen SLM1 bis SLMn, TMl, MoH und SIA. Bei den peripheren Baugruppen SLMl bis SLMn handelt es sich um Teilnehmerschaltungen, bei den Baugruppen TM(x) um Leitungsschaltungen. Mit den Teilnehmerschaltungen werden z.B. analoge und digitale Teilnehmerschnittstellen realisiert. Auf der jeweiligen Baugruppe befinden sich die entsprechenden Schaltungen zur Erkennung der jeweiligen Endgerätezustände sowie eine Einrichtung zur Einspeisung des Rufstroms. Die Anzahl der Leitungsschaltungen TM(x) richtet sich jeweils nach der Ausbaustufe der Anlage.

Weiterhin kann als periphere Baugruppe eine Schaltung zur Gebührenerfassung SIA sowie eine "Music on Hold"- Baugruppe MoH, mittels welcher wartenden Teilnehmern Musik oder Ansagen zugespielt werden können, vorgesehen sein.

Die zentrale Steuerung CCU besteht im wesentlichen aus einem zentralen Prozessor CP, einer Speichereinheit M, einer Timer-Einrichtung T sowie einer Takterzeugungsschaltung C. Die einzelnen Einheiten der zentralen Steuerung CCU sind untereinander über die PCM-Datenübertragungsleitungen HWY0...HWY3 verbunden.

Die einzelnen peripheren Steuerungen PCU0...PCU6, die über die PCM-Datenübertragungsleitung HWY0 und eine HDLC-Übertragungsstrecke für den Austausch von Meldungen mit der zentralen Steuerung CCU verbunden sind, bestehen im wesentlichen aus einem peripheren Prozessor CPP(x), einer HDSC-Steuerung HSCC, einem Software-Zähler Z(x) sowie aus mehreren Durchschalteeinrichtungen IDEC.

Nachfolgend soll die Wirkungsweise der erfindungsgemäßen Kommunikationsanlage beschrieben werden.

Bei der Kommunikationsanlage gemäß der vorliegenden Erfindung ist jede periphere Baugruppe über eine Datenleitung DL mit der zentralen Steuerung CCU verbunden. Auf den peripheren Baugruppen sind erfindungsgemäß nur noch Schutzbausteine und Telekommunikationsbausteine der Schicht 1 gemäß dem "ISO-Schichtmodell" untergebracht. Diese Baugruppen, z. B. die So-, Upo- und S2M-Schnittstellen, können ohne Steuerwerke aufgebaut werden, wodurch sich die Möglichkeit ergibt, auf einer Leiterplatte mehr Einheiten als bisher unterzubringen. Auch auf die bei Prozessorbaugruppen oft notwendigen Mehrlagenplatinen kann in diesem Fall verzichtet werden, was zu erheblichen Kosteneinsparungen führt. Als Schnittstelle zur zentralen Steuerung CCU wird eine genormte serielle IOM Rev.2-Schnittstelle IOM2 verwendet. Über die Datenleitungen DL werden alle Signalisierungs-, Nutz- und Paketdaten übertragen.

Über die Schnittstellensteuerungen EPIC in der zentralen Steuerung CCU werden die Signalisierungs- und Paketdaten einer PCM-Datenübertragungsleitung HWY0, an welche die peripheren Steuerungen PCU(x) angeschlossen sind, zugeführt. Diese peripheren Steuerungen übernehmen die Aufgabe der Schicht 2-Bausteine nach dem sogenannten "ISO-Schichtmodell".

Jede periphere Steuerung besitzt einen Software-Zähler Z(x) (z. B. Z0 oder Z1), der den Auslastungsgrad dieser Steuerung anzeigt. Bei hoher Auslastung können dann D-Kanalinformationen von Teilnehmern, die Fernsprechverkehr oder Datenverkehr aufnehmen wollen, auf andere periphere Steuerungen umgeleitet werden, die einen geringen Auslastungsgrad aufweisen.

Dies hat den Vorteil, daß bei Anlagen mit geringem Fernsprech- und Datenverkehr nur wenige periphere Steuerungen aufgewendet werden müssen, und andererseits bei Anlagen mit hoher Informationsverarbeitung eine theoretisch beliebige Anzahl von peripheren Steuerungen parallel geschaltet werden können. Die maximale Anzahl der peripheren Steuerungen ist lediglich durch die Einbauplätze festgelegt. Somit können bei der erfindungsgemäßen Kommunikationsanlage die anfallenden Arbeiten besonders vorteilhaft aufgeteilt werden. Aufgrund der schnelleren Reaktionszeiten ist es auch möglich, die Buffer-Speicher zu verkleinern.

Hardware-Umschaltungen sind nicht erforderlich, da alle "Schicht 2-Bausteine" auf jeden Time Slot des PCM-Rahmens zugreifen können. Die Durchschaltung der Time-Slots erfolgt über die Schnittstellensteuerungen EPIC innerhalb der zentralen Steuerung. Diese zentrale Aufgabe wird somit von der zentralen Software erledigt und es entfällt dieser Teil des Meldungsverkehrs zu den peripheren Steuerungen.

Alle 10 ms wird von einem Timer T ein Interrupt generiert, der eine Routine einleitet, in der die allgemeinen Aufgaben des Betriebssystems bearbeitet werden. Die restliche Zeit steht für die Abarbeitung der Hardware-Anforderungen, der Bearbeitung des Meldungsverkehrs sowie für "Schicht 1-" und "Schicht 2-Routinen" zur Verfügung. Sind diese Arbeiten ausgeführt, so wartet der Prozessor in einem Idle-Zyklus auf das Eintreffen des nächsten Interrupts. Hier kann ein Zähler eingefügt werden, der integriert über einen Zeitraum X x 10 ms ein Maß für die Auslastung des Prozessors darstellt.

## Patentansprüche

1. Kommunikationsanlage bestehend aus einer zentralen Steuerung (CCU), mehreren peripheren Steuerungen (PCU(x)) und einer Vielzahl von peripheren Baugruppen (SLM(x); TM(x); MoH; SIA), dadurch **gekennzeichnet**,
- daß alle peripheren Baugruppen (SLM(x); TM(x); MoH; SIA) über eigene Datenleitungen (DL) mit der zentralen Steuerung (CCU) verbunden sind,
-- wobei über diese Datenleitungen (DL) sowohl Informationsdaten als auch Signalisierungsdaten übertragen werden,
- daß innerhalb der zentralen Steuerung (CCU) die Informationsdaten von den Signalisierungsdaten getrennt werden,
- daß die Signalisierungsdaten über einen separaten Daten-Highway (HWY0) den peripheren Steuerungen (PCU(x)) zugeführt werden,
-- wobei jede periphere Steuerung (PCU(x)) einen den jeweiligen Auslastungsgrad angebenden Software-Zähler (Z(x)) aufweist, und
-- wobei bei hoher Auslastung einer peripheren Steuerung (PCU(x)) die Signalisierungsdaten auf andere periphere Steuerungen (PCU(x)) umgeleitet werden.

## Claims

1. Communications installation comprising a central controller (CCU), a number of peripheral controllers (PCU(x)) and a multiplicity of peripheral modules (SLM(x); TM(x); MoH; SIA), characterized in that
- all peripheral modules (SLM(x); TM(x); MoH; SIA) are connected to the central controller (CCU) via separate data lines (DL),
-- both information data and signalling data being transmitted via these data lines (DL),
- in that the information data are separated from the signalling data within the central controller (CCU),
- in that the signalling data are supplied to the peripheral controllers (PCU(x)) via a separate data highway (HWY0),
-- each peripheral controller (PCU(x)) exhibiting a software counter (Z(x)) specifying the respective usage factor, and
-- the signalling data being diverted to other peripheral controllers (PCU(x)) in the event of high usage of one peripheral controller (PCU(x)).

## Revendications

1. Installation de communication constituée d'une commande centrale (CCU), de plusieurs commandes périphériques (PCU(x)) et d'une pluralité de modules périphériques (SLM(x); TM(x); MoH; SIA), **caractérisée en ce que**,
- tous les modules périphériques (SLM(x); TM(x); MoH; SIA) sont reliés à la commande centrale (CCU) par l'intermédiaire de lignes de données propres (DL),
-- aussi bien des données d'informations que des données de signalisation étant transmises par l'intermédiaire de ces lignes (DL) de données,
- les données d'informations sont séparées des données de signalisation dans la commande centrale (CCU),
- les données de signalisation sont envoyées aux commandes périphériques (PCU(x)) par l'intermédiaire d'un bus de données distinct (HWYO),
-- chaque commande périphérique (PCU(x)) comporte un compteur logiciel (Z(x)) indiquant la charge de travail respective, et
-- les données de signalisation sont déviées sur d'autres commandes périphériques (PCU(x)) en cas de grande charge d'une commande périphérique (PCU(x)).
